# EUROPEAN PATENT APPLICATION

(11) **EP 2 962 953 A1**
(43) Date of publication of application: **06.01.2016**
(21) Application number: 14177337.4
(22) Date of filing: 16.07.2014
(51) Int. Cl.: B65D 75/00, B65D 65/40

(54) **Recyclable polypropylene bags**

(30) Priority: 30.06.2014 IL 23345714
(71) Applicant: Cargal Flexible Packaging Ltd., 4027000 Mishmar HaSharon (IL)
(72) Inventor: Baigorria, Ruben, 79351 D.N Lachish Darom (IL)
(74) Representative: Petraz, Gilberto Luigi

(57) **Abstract**

A bag for storing granules, powder or liquid, including two sides made from a laminate of two or more layers of polypropylene films, wherein one layer is heat sealable and one layer is non-heat sealable and wherein the heat sealable layers on each side are positioned to face each other to form the bag by heat sealing them together.

## Description

### TECHNICAL FIELD

The present disclosure relates generally to recyclable bags and more specifically to recyclable bags that are made from polypropylene.

### BACKGROUND

Laminated bags are used for packing and distributing material such as granules, powder or liquids. The walls of the laminated bags are made up from a few layers of laminated film selected depending on the desired characteristics of the bag.

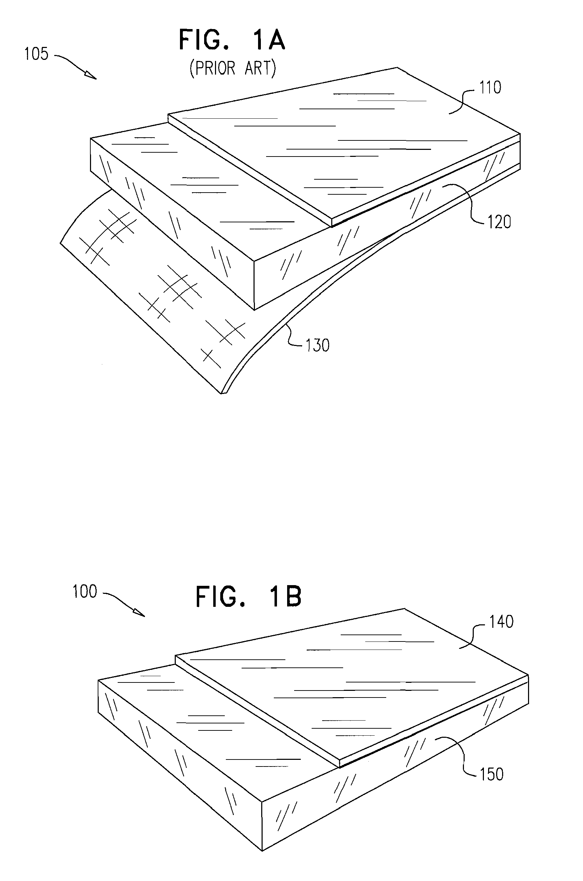

A typical bottom gusset pouch also known as a stand up pouch is a bag made from a laminate having two or three layers to provide it with the characteristics needed to serve as a stand up pouch. As shown in Fig. 1A a typical stand up pouch may be made from a laminate 105 having a first outer layer 110 made from polyester (PET). The outer layer 110 may have a typical thickness of between about 10-20 microns and is good for printing on and provides the bag with rigidity. The polyester is not suitable for hot sealing construction since it is heat durable and prevents connecting the outer layer 110 of the laminate by a heat seal process. A second middle layer 120 may be provided from oriented polyamide (e.g. o-nylon) with a typical thickness of between 10-25 microns. This layer provides flexibility, puncture resistance and tear resistance. A third inner layer 130 is made from polyethylene (PE) and serves as the inner wall of the pouch. Inner layer 130 generally has a thickness of 60 to 100 micron to provide, a water vapor barrier and strength for the walls of the pouch, by having a combined thickness of 80-120 micron. The polyethylene layer is suitable for connecting the laminated walls of the pouch using a heat seal process. When forming a stand up pouch with a bottom gusset it is important that one side of the laminated walls (the inner layer 130) can be attached with a heat seal process and one side (the outer layer 110) cannot so that the walls can be sealed and the bottom gusset will not be sealed shut in a standard construction process.

Typically the outer layer 110 will use a material that can easily be printed on with a standard printing process, such as flexographic, roto-gravure or offset printing, whereas the inner wall 130 does not necessarily need to be printable.

However the standard selection of films for each layer of the laminate according to functionality, for example as described above provides walls that are not recyclable (a result of being a combination of different materials which are not chemically compatible) and generally cannot even be processed as a single type of material since they include multiple types with different characteristics.

### SUMMARY

An aspect of an embodiment of the disclosure relates to a recyclable bag having two sides having two or more laminated film layers for each side all from variants of polypropylene, wherein the outermost layer is not heat sealable and the innermost layer is heat sealable. The innermost layers are positioned facing each other and heat sealed together to form the bag.

In an exemplary embodiment of the disclosure, the bag includes a base gusset that is heat sealed between the two sides to form a stand up pouch.

There is thus provided according to an exemplary embodiment of the disclosure, a recyclable bag for storing granules, powder or liquid, comprising:
Two sides made from a laminate of two or more layers of polypropylene films;
Wherein one layer is heat sealable and one layer is non-heat sealable and wherein the heat sealable layers on each side are positioned to face each other to form the bag by heat sealing them together.

In an exemplary embodiment of the disclosure, the bag includes a base gusset to form a stand up pouch. Optionally, the bag is designed to form a spout that can be opened by cutting off an end of the spout that is heat sealed together.

In an exemplary embodiment of the disclosure, the non-heat sealable layer is made from plane BOPP (Bi-Oriented Polypropylene). Optionally, the heat sealable layer is made from CPP (cast extruded polypropylene). In an exemplary embodiment of the disclosure, the thickness of the heat sealable layer is at least twice as thick as the non-heat sealable layer. Optionally, the bag is made entirely from layers of polypropylene films. In an exemplary embodiment of the disclosure, the non-heat sealable layer serves as the exterior of the bag.

There is further provided according to an exemplary embodiment of the disclosure, a method of preparing a recyclable bag for storing granules, powder or liquid, comprising:
Receiving two sides made from a laminate of two or more layers of polypropylene films; wherein one layer of the laminate is heat sealable and one layer is non-heat sealable;
Positioning the heat sealable layers of each side facing each other;
heat sealing the two sides together to form the bag.

In an exemplary embodiment of the disclosure, the method further comprises attaching a base gusset to form a stand up pouch. Optionally, the non-heat sealable layer is made from plane BOPP. In an exemplary embodiment of the disclosure, the heat sealable layer is made from CPP. Optionally, the thickness of the heat sealable layer is at least twice as thick as the non-heat sealable layer.

### BRIEF DESCRIPTION OF THE DRAWINGS

The present disclosure will be understood and better appreciated from the following detailed description taken in conjunction with the drawings. Identical structures, elements or parts, which appear in more than one figure, are generally labeled with the same or similar number in all the figures in which they appear, wherein:
Fig. 1A is a schematic illustration of a three layer laminate for preparing a stand up pouch as known in the art.
Fig. 1B is a schematic illustration of a two layer laminate for preparing a stand up pouch, according to an exemplary embodiment of the disclosure;
Fig. 2 is a schematic illustration of a stand up pouch, according to an exemplary embodiment of the disclosure;
Fig. 3 is a schematic illustration of a laminated film for preparing a stand up pouch, according to an exemplary embodiment of the disclosure; and
Fig. 4 is a schematic illustration of a cut out laminated film for preparing a stand up pouch, according to an exemplary embodiment of the disclosure.

### DETAILED DESCRIPTION

Fig. 1B is a schematic illustration of a two layer laminate 100 for preparing a stand up pouch, according to an exemplary embodiment of the disclosure. Laminate 100 serves as the raw material for producing bags of various types including stand up pouch bags having a bottom gusset. In an exemplary embodiment of the disclosure, both layers are made from polypropylene films of different types. An outer layer 140 is made from a polypropylene film that is printable, withstands high temperatures (e.g. between 120°C to 140°C or even up to 200°C for short terms such as during heat sealing) and is manufactured for cold sealing and not heat sealable. An example of such a film is Biaxial Oriented (or Bi-Oriented) Polypropylene (BOPP) Plane films (or Plane BOPP films) that are not heat sealable in contrast to standard BOPP films which are heat sealable. An example of a Plane BOPP film is referred to as PGR that is manufactured by MANUCOR from Sessa Aurunca, Italy, PG that is manufactured by IMPEX INTERNATIONAL GROUP from Houston Texas or BGR that is manufactured by FILMAX CORP from Seoul, Korea.

In an exemplary embodiment of the disclosure, an inner layer 150 made from a different type of polypropylene film that is heat sealable, for example various types of Extruded Polypropylene such as Cast extruded polypropylene (CPP) or blown film extruded polypropylene. Heat sealable polypropylene films are also manufactured by the companies listed above (e.g. MANUCOR, IMPEX and FILMAX).

In an exemplary embodiment of the disclosure, laminate 100 is formed by laminating outer layer 140 with inner layer 150 to serve as the material for forming bags. Optionally, outer layer 140 is more rigid and provided as a thin film, for example between 10-30 microns whereas inner layer 150 is more flexible and provided as a thicker layer, for example 25-125 microns. In some embodiments of the disclosure, inner layer 150 is at least twice the thickness of outer layer 140 providing most of the thickness of laminate 100. Alternatively, both layers (140 and 150) may be the same thickness or inner layer 150 may be thinner than outer layer 140.

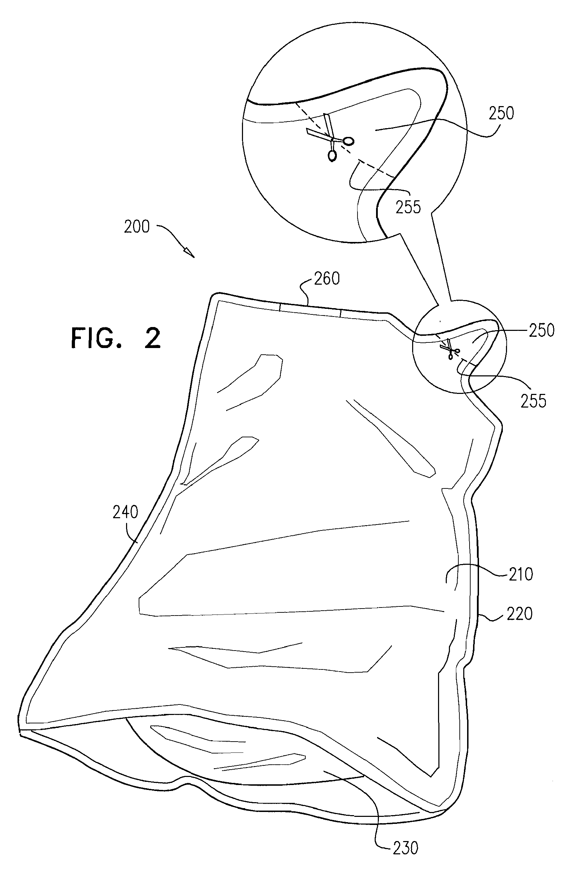

Fig. 2 is a schematic illustration of a stand up pouch 200, according to an exemplary embodiment of the disclosure. During the manufacture of many bags it may not make a difference if both sides of laminate 100 are heat sealable or not, however when manufacturing stand up pouch bags it is important that one side be heat sealable (inner layer 150) and the other side not (outer layer 140) to prevent complications in the standard manufacture process.

As shown in Fig. 2 stand up pouch 200 is made up from a first side 210, a second side 220 and a base gusset 230. Optionally, first side 210 and second side 220 are mirror images of each other, with inner layer 150 of the first side 210 facing inner layer 150 of the second side 220. In an exemplary embodiment of the disclosure, the two sides and base gusset are heat sealed together along line 240 to form stand up pouch 200. Optionally, a fill position 260 is initially left open (not heat sealed) for filling the pouch and can be sealed after filling the pouch with content. Optionally, once pouch 200 is filled up it can stand up on a shelf because of the base gusset 230. In some embodiments of the disclosure first side 210 and second side 220 may be shaped to form a spout 250 for pouring out content from pouch 200 if cut opened along a cut line 255.

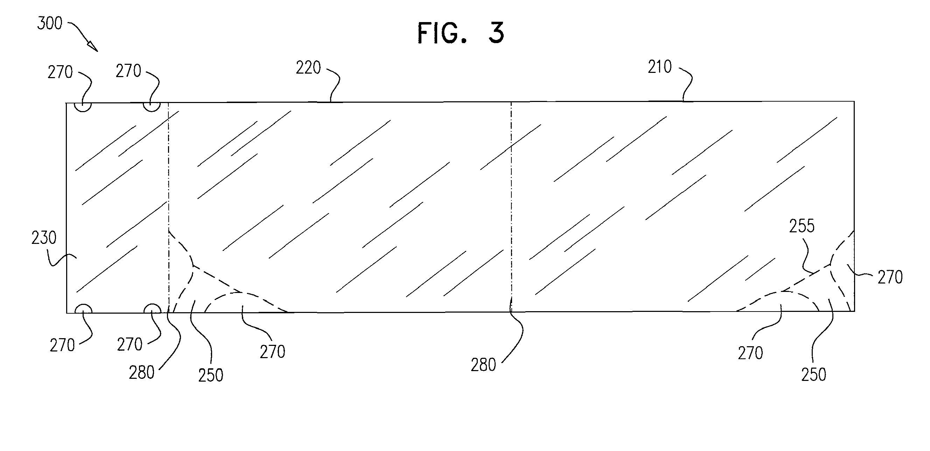

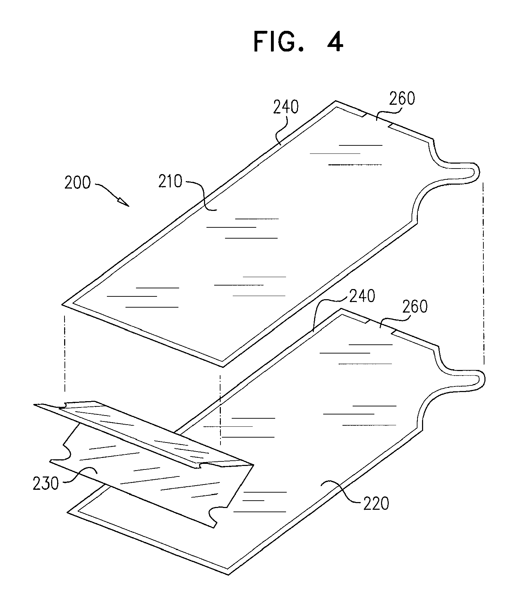

Fig. 3 is a schematic illustration of a laminated film 300 for preparing stand up pouch 200 and Fig. 4 is a schematic illustration of the laminated film 300 cut up and deployed to form stand up pouch 200, according to an exemplary embodiment of the disclosure. In an exemplary embodiment of the disclosure, laminated film 300 is cut along cut lines 280 to separate first side 210, second side 220 and base gusset 230. Additionally, areas 270 are cut out to form the outline shape for the stand up pouch 200. In an exemplary embodiment of the disclosure, base gusset 230 is folded in the middle with the side that is heat sealable (inner layer 150) facing toward inner layer 150 of first side 210 and second side 220. Accordingly when heat sealing along line 240 the base gusset 230 is coupled to stand up pouch 200 but is not heat sealed to itself on the bottom since the non-heat sealable layer (outer layer 140) is folded over on itself and is not coupled together.

In an exemplary embodiment of the disclosure, cut out areas 270 on base gusset 230 are situated so that the inner layer 150 of first side 210 and second side 220 are heat sealed together through cut out areas 270 on base gusset 230 to lock around base gusset 230 on the sides of stand up pouch 200.

In an exemplary embodiment of the disclosure, stand up pouch 200 from different layers of polypropylene as described above is completely recyclable, since only one family of materiel (polypropylene) is used and that family is recyclable.

In some embodiments of the disclosure, other shaped bags may be formed using laminate 100. Optionally, more than two layers may be used for laminate 100 between inner layer 150 and outer layer 140 as long as the extra layers are recyclable.

In some embodiments of the disclosure, additional elements can be attached to pouch 200, for example a rigid spout or zip lock to seal the top of the pouch 200 or fill position 260. However the additional elements need to be manufactured from polypropylene to maintain being recyclable.

It should be appreciated that the above described methods and apparatus may be varied in many ways, including omitting or adding steps, changing the order of steps and the type of devices used. It should be appreciated that different features may be combined in different ways. In particular, not all the features shown above in a particular embodiment are necessary in every embodiment of the disclosure. Further combinations of the above features are also considered to be within the scope of some embodiments of the disclosure. It will also be appreciated by persons skilled in the art that the present disclosure is not limited to what has been particularly shown and described hereinabove.

## Claims

1. A recyclable bag for storing granules, powder or liquid, comprising:
two sides made from a laminate of two or more layers of polypropylene films;
wherein one layer is heat sealable and one layer is non-heat sealable and wherein the heat sealable layers on each side are positioned to face each other to form the bag by heat sealing them together.

2. A bag according to claim 1, wherein the bag includes a base gusset to form a stand up pouch.

3. A bag according to claim 1, wherein the bag is designed to form a spout that can be opened by cutting off an end of the spout that is heat sealed together.

4. A bag according to claim 1, wherein the non-heat sealable layer is made from plane BOPP (plane Bi -Oriented polypropylene).

5. A bag according to claim 1, wherein the heat sealable layer is made from CPP (Cast extruded polypropylene) or blown film extruded polypropylene.

6. A bag according to claim 1, wherein the thickness of the heat sealable layer is at least twice as thick as the non-heat sealable layer.

7. A bag according to claim 1, wherein the bag is made entirely from layers of polypropylene films.

8. A bag according to claim 1, wherein the non-heat sealable layer serves as the exterior of the bag.

9. A method of preparing a recyclable bag for storing granules, powder or liquid, comprising:
receiving two sides made from a laminate of two or more layers of polypropylene films; wherein one layer of the laminate is heat sealable and one layer is non-heat sealable;
positioning the heat sealable layers of each side facing each other;
heat sealing the two sides together to form the bag.

10. A method according to claim 9, further comprising attaching a base gusset to form a stand up pouch.

11. A method according to claim 9, wherein the non-heat sealable layer is made from plane BOPP (bi oriented polypropylene).

12. A method according to claim 9, wherein the heat sealable layer is made from CPP (cast extrusion polypropylene) or blown film extruded polypropylene.

13. A method according to claim 9, wherein the thickness of the heat sealable layer is at least twice as thick as the non-heat sealable layer.
